# EUROPÄISCHE PATENTSCHRIFT

(11) **EP 1 043 198 B1**
(45) Veröffentlichungstag und Bekanntmachung des Hinweises auf die Patenterteilung: **08.12.2004**
(21) Anmeldenummer: 00107131.5
(22) Anmeldetag: 07.04.2000
(51) Int. Cl.: B60R 21/20

(54) **Lenkrad mit Airbagmodul**
Steering wheel with airbag module
Volant avec module de coussin de sécurité

(30) Priorität: 09.04.1999 DE 29906377 U
(43) Veröffentlichungstag der Anmeldung: 11.10.2000
(73) Patentinhaber: TRW Automotive Safety Systems GmbH, 63743 Aschaffenburg (DE)
(72) Erfinder: Bathon, Michael, 63811 Stockstadt (DE); Krebs, Jürgen, 63743 Aschaffenburg (DE); Burgard, Jürgen, 63768 Hösbach (DE); Kullmann, Kurt, 63843 Sulzbach (DE)
(74) Vertreter: Kitzhofer, Thomas, Dipl.-Ing.

(56) Entgegenhaltungen:
- EP-A- 0 704 367
- DE-A- 4 140 275
- DE-U- 29 722 824
- US-A- 5 738 369
- US-A- 5 775 725

## Beschreibung

Die Erfindung betrifft ein Lenkrad für Kraftfahrzeuge gemäß dem Oberbegriff des Anspruchs 1.

Bei derartigen Lenkrädern muß zwischen der zur Erzeugung eines Hupsignals gegen eine Rückstellkraft in Richtung der Lenkradachse beweglich angeordneten Abdeckkappe und der angrenzenden Umschäumung eine Bewegungsfuge vorgesehen werden, wenn man nicht auf die hinsichtlich der Lenkradmontage und Airbagbefestigung im Lenkrad komplizierteren Ausführungsformen zurückgreifen will, bei denen die Abdeckkappe in die Lenkradummantelung integriert und einteilig mit dieser hergestellt ist.

In der gattungsgemäßen US-A-5 738 369 ist ein Lenkrad mit einem Airbag-Modul gezeigt, das zur Betätigung der Hupe in das Innere des Lenkrads hinein verschoben werden kann. Eine Abdeckkappe, die das Airbag-Modul nach außen abschließt, ist an einem Generatorträger befestigt. Vom Generatorträger stehen drei Stege schräg nach unten ab. In jedem der Stege ist eine Öffnung ausgebildet, die jeweils in Eingriff mit einem am Skelett des Lenkrads ausgebildeten Befestigungshaken ist und das Airbag-Modul mit dem Lenkrad verbindet.

Die DE-A-41 40 275 stellt ein Lenkrad mit einer Hupenmechanik vor, bei dem eine Trägerplatte mit einer Abdeckkappe verbunden ist, die das Lenkrad nach außen abschließt. Die Trägerplatte ist über Rasthaken, die in Ausnehmungen im Lenkradkörper verrasten, am Lenkrad befestigt.

Nach der DE-U-297 22 824 ist ein Airbag-Modul fest mit einem Lenkrad verbunden. Hierzu sind am Lenkradskelett ausgebildete Rasthaken in Eingriff mit an einem Generatorträger vorgesehenen, sich senkrecht zur Lenkradachse erstreckenden Eingriffslaschen. Zusätzlich sind am Lenkradskelett mit einer Umschäumung überzogene Führungsstifte angeordnet, die in Öffnungen im Boden des Generatorträgers ragen.

Bei vielen bekannten Ausführungsformen mit getrennter Abdeckkappe ist es schwierig und unter Umständen mit erheblichem Aufwand verbunden, die unvermeidbare Bewegungsfuge zwischen Abdeckkappe und Lenkradummantelung überall gleich breit auszuführen, weil sich insoweit die Fertigungstoleranzen bei der Herstellung der Lenkradummantelung, der Abdeckkappe und aller für die Befestigung des Airbagmoduls am Lenkrad beteiligten Bauelemente im ungünstigsten Fall addieren können. Das führt in der Praxis zu deutlich unterschiedlich breiten Bewegungsfugen, die optisch stören und nicht hingenommen werden können.

Es besteht somit die Aufgabe, für ein Lenkrad der eingangs genannten Art dafür zu sorgen, daß die Breite der unvermeidlichen Bewegungsfugen in engen Grenzen eingehalten werden kann und daß die mögliche Kumulation der Fertigungstoleranzen die Zuordnung zwischen Abdeckkappe und Lenkradummantelung optisch nicht in unzuträglicher Weise beeinträchtigen kann. Die gesuchte Lösung soll konstruktiv und finanziell im Rahmen bisher angewandter Techniken liegen, keinen zusätzlichen Platz erfordern und möglichst leicht und zuverlässig ausführbar sein.

Zur Lösung dieser Aufgabe und zur richtigen Positionierung der Abdeckkappe relativ zur Lenkradummantelung werden erfindungsgemäß die Merkmale des Anspruchs 1 vorgeschlagen.

Durch die erfindungsgemäßen Maßnahmen kann die Positionierung des Airbagmoduls und damit der Abdeckkappe unabhängig von der eigentlichen Befestigung des Airbagmoduls am Lenkrad sichergestellt werden, ohne daß eine Mehrzahl von Fertigungstoleranzen hierauf einen Einfluß hat. Die Befestigung des Airbagmoduls am Lenkradskelett kann von der Teilaufgabe "Positionierung" befreit und so gestaltet werden, daß sie die erfindungsgemäße Positionierung mittels Ausnehmungen in der Umschäumung und Steckstifte am Generatorträger nicht beeinflußt. Mit anderen Worten, die Positionierung der Abdeckkappe in der Ebene senkrecht zur Lenkradachse und relativ zur Umschäumung des Lenkradskeletts erfolgt nicht mehr über die Befestigung des Airbagmoduls, sondern wesentlich unmittelbarer über die Umschäumung des Lenkradskeletts und insbesondere durch am Generatorträger angeordnete Steckstifte, die ohne großen Aufwand am Generatorträger so angebracht werden können, daß zwischen ihnen und der ebenfalls am Generatorträger befestigten Abdeckkappe nur eine geringe Anzahl von Fertigungstoleranzen, die überdies in sehr engen Grenzen eingehalten werden können, Einfluß auf die Positionierung zwischen Abdeckkappe und Umschäumung des Lenkradskeletts nehmen kann.

Vorteilhafte Ausgestaltungen des Erfindungsgedankens sind in den Unteransprüchen 2 bis 7 beschrieben. Weitere Einzelheiten werden anhand des in den Figuren 1 bis 7 dargestellten Ausführungsbeispiels näher erläutert. Es zeigen:
Figur 1 eine Ansicht eines umschäumten Lenkradskeletts mit Abdeckkappe für ein Airbagmodul nach der Erfindung;
Figur 2 einen Schnitt durch das Lenkrad gemäß Figur 1 längs der Linie A - A;
Figur 3 einen Schnitt durch das Lenkrad gemäß Figur 1 längs der Linie B - B;
Figur 4 eine vergrößerte Darstellung eines Teils von Figur 3;
Figur 5 eine vergrößerte Darstellung eines anderen Teils von Figur 3;
Figur 6 einen Schnitt durch das Teil gemäß Figur 5 längs der Linie C - C; und
Figur 7 eine modifizierte Ausführung der Ausnehmung und des Steckstiftes in zwei unterschiedlichen Stellungen.

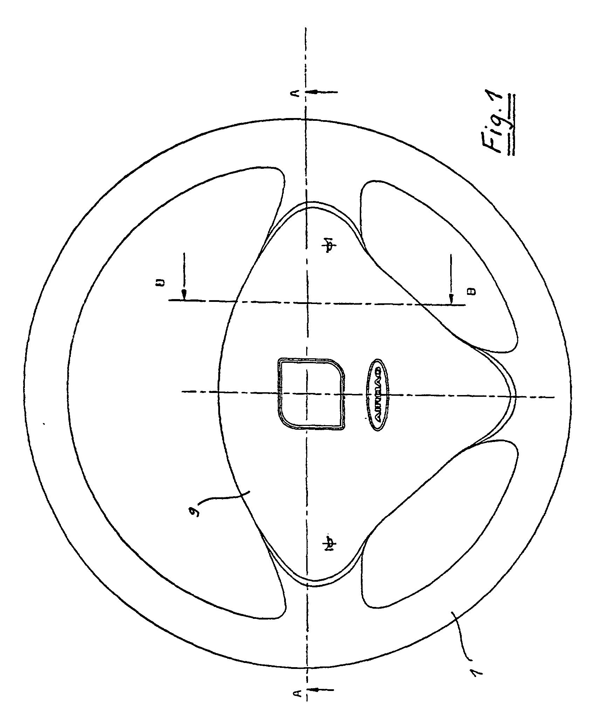

Aus der Ansichtsdarstellung eines Lenkrades gemäß Figur 1 ist dessen Umschäumung 1 sowie die Abdeckkappe 9 des Airbagmoduls ersichtlich, wobei letztere zweimal mit einem Posthorn-Zeichen versehen ist, um den Benutzer darauf hinzuweisen, daß die Abdeckkappe 9 zur Betätigung der Fahrzeughupe benutzt werden muß. Außerdem ist aus Figur 1 die Lage der Schnitte A - A sowie B - B ersichtlich.

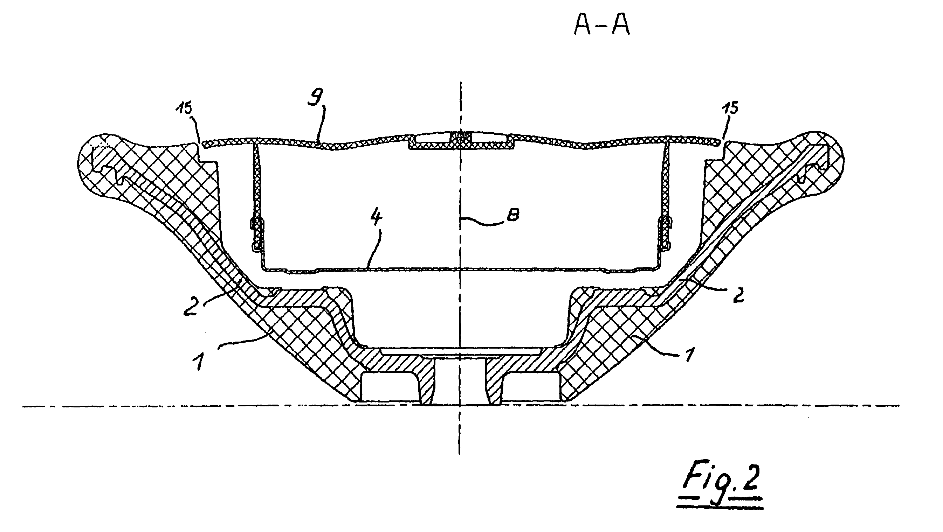

Aus der Schnittdarstellung gemäß Figur 2 ergibt sich die Lage des Airbagmoduls mit Generatorträger 4 und Abdeckkappe 9 relativ zum Lenkradskelett 2 bzw. zu dessen Umschäumung 1. Das gesamte Airbagmodul ist gegen eine Rückstellkraft etwa parallel zur Lenkradachse 8 nach unten verschieblich mit dem Lenkradskelett 2 verbunden, um einen oder mehrere Hupkontakte betätigen zu können. Aus Figur 2 ergibt sich ferner, daß zwischen dem Rand der Abdeckkappe 9 und der Umschäumung 1 des Lenkradskeletts 2 eine Bewegungsfuge 15 vorgesehen ist, die - wie eingangs erläutert - überall gleich breit sein sollte. Dazu ist es erforderlich, die Abdeckkappe 9 in einer Ebene senkrecht zur Lenkradachse 8 relativ zur Umschäumung 1 genau zu positionieren.

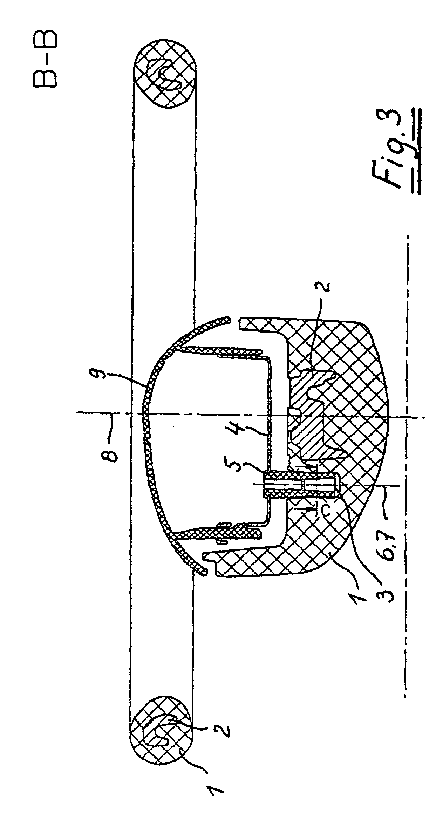

In der Schnittdarstellung B - B gemäß Figur 3 sind mit 1 und 2 wiederum die Umschäumung bzw. das Lenkradskelett bezeichnet. Die Abdeckkappe hat wiederum die Bezugsziffer 9 und die Lenkradachse die Bezugsziffer 8. Erfindungsgemäß ist in der Umschäumung 1 eine Ausnehmung 3 vorgesehen, in die ein Steckstift 5 eingreift, der mit dem Generatorträger 4 verbunden ist. Durch den Generatorträger 4 seinerseits wird die Abdeckkappe 9 in der Ebene senkrecht zur Lenkradachse 8 genau positioniert. Da nicht das Lenkradskelett 2, sondern die Umschäumung 1 zur Ausbildung einer Positionierungshilfe in Form von Ausnehmungen 3 benutzt wird und andererseits am Generatorträger 4 mit den Steckstiften 5 die Gegenstücke der Positionierungshilfe angeordnet sind, kann die Positionierung der Abdeckkappe 9 relativ zur Umschäumung 1 unabhängig von den Fertigungstoleranzen der Befestigungsmittel erfolgen, die zur Verbindung des Airbagmoduls mit dem Lenkradskelett erforderlich sind und die für erheblichen Reaktionskräfte bei der Auslösung des Airbags ausgelegt werden müssen.

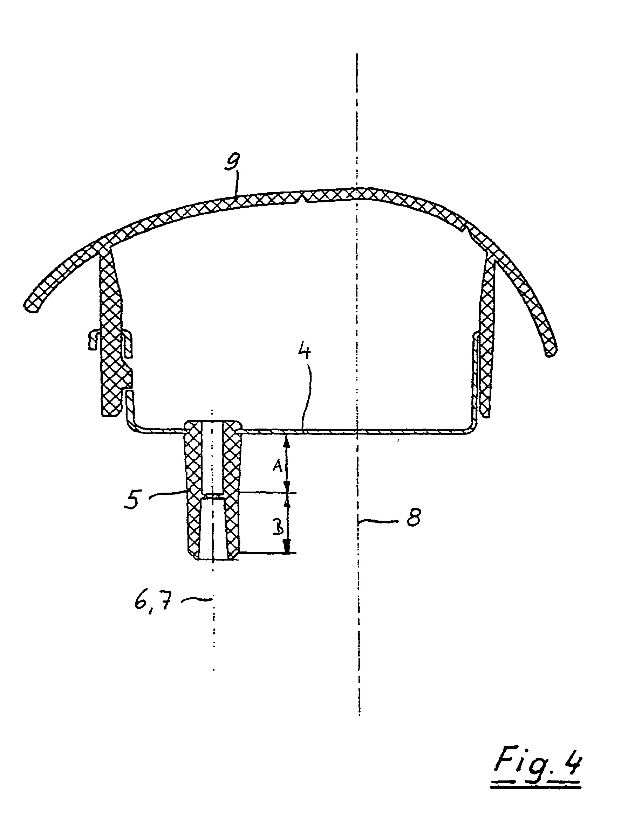

Aus Figur 4 ergibt sich noch einmal in vergrößerter Darstellung ein Schnitt durch den Generatorträger 4, die Abdeckkappe 9 und den Steckstift 5, dessen Achse 6, 7 parallel zur Achse 8 des Lenkrades verläuft. Darüber hinaus ist der in Figur 4 gezeigte Steckstift 5 in Abschnitte A und B unterteilt. Im Abschnitt A verkleinert sich der Steckstift 5 konisch, ausgehend von seiner Anspritzstelle am Generatorträger 4. Diese konische Verjüngung des Steckstiftes dient als Entformungsschräge beim Entfernen des Steckstiftes aus einem Formwerkzeug (nicht gezeigt). Im Abschnitt B hat der Steckstift 5 einen gleichbleibenden Durchmesser; dieser Abschnitt B dient als Führungsabschnitt, der in der Ausnehmung 3 aufgenommen wird. Am bezüglich Figur 4 unteren Ende des Steckstifts befindet sich eine kegelförmige Anfasung, die als Einführhilfe beim Einsetzen des Stifts 5 in die Ausnehmung 3 dient.

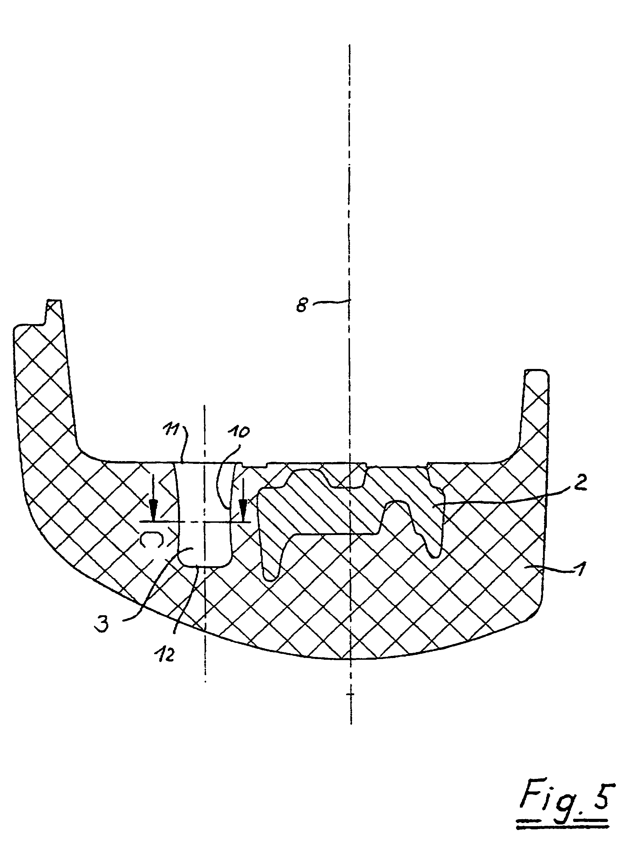

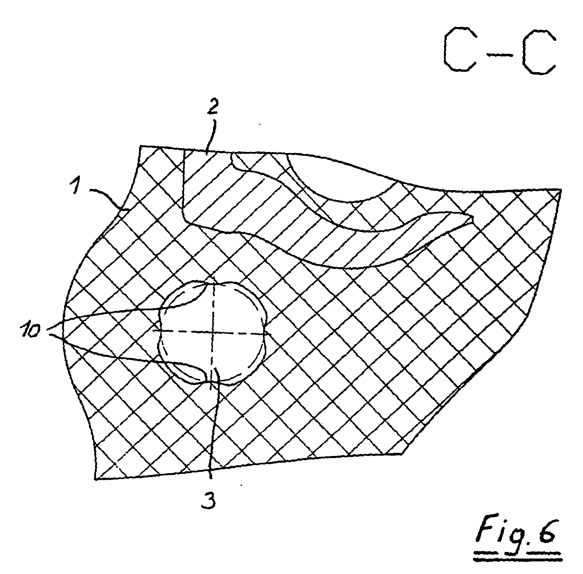

Gleichermaßen ergibt sich aus Figur 5 eine vergrößerte Darstellung der Schnittdarstellung des Lenkradbereichs mit der Ausnehmung 3 in der Umschäumung 1. Mit 2 ist das Lenkradskelett und mit 8 ist wieder die Achse des Lenkrades bezeichnet. Die Ausnehmung 3 hat einen sich vom Eintrittsende 11 zu ihrem Boden 12 hin zunächst verkleinerten und danach wieder erweiterten Querschnitt, wodurch eine gewisse Kippbewegung der Abdeckkappe 9 relativ zur Umschäumung 1 bzw. zum Lenkradskelett um die nach innen vorstehenden Wülste 10 (vergl. Figur 6) möglich ist. Da die Befestigungsmittel so ausgelegt sind, daß sie einerseits die Reaktionskräfte bei einer Aktivierung des Airbag aufnehmen können, andererseits aber eine Relativbewegung zwischen Airbagmodul und Lenkrad in Richtung Lenkradachse 8 ermöglichen müssen und keinen Einfluß auf die Positionierung der Abdeckkappe 9 in der Ebene senkrecht zur Lenkradachse haben, müssen sie so ausgelegt sein, daß bei einseitigem Druck auf die Abdeckkappe 9 auch eine gewisse Kippbewegung des Airbagmoduls relativ zum Lenkrad möglich ist. Dementsprechend sind auch die Positionierungsmittel, Ausnehmung 3 und Steckstift 5 so ausgelegt, daß die Positionierung in der Ebene senkrecht zur Lenkradachse 8 eine geringfügige Kippbewegung nicht behindert.

Aus der weiter vergrößerten Darstellung gemäß Figur 6 ergibt sich die Querschnittsgestaltung der Ausnehmung 3 mit ihren nach innen vorstehenden Wülsten 10, wodurch die erforderliche Positionierung der Abdeckkappe 9 relativ zur Umschäumung 1 des Lenkradskeletts 2 auf relativ kleine Berührungsflächen begrenzt werden kann.

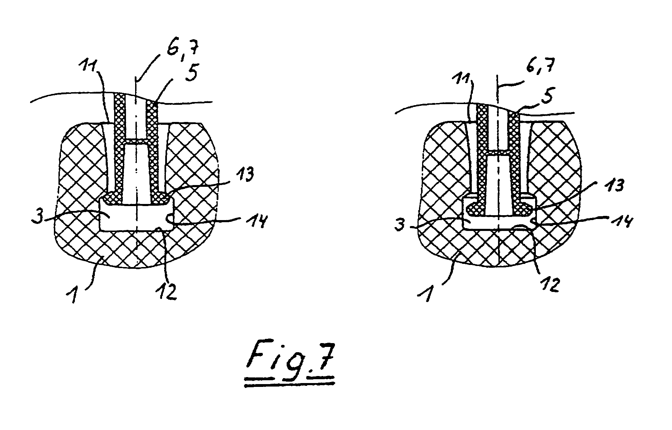

Figur 7 zeigt noch eine mögliche Abwandlung der Ausnehmungen 3 und Steckstifte 5. Angrenzend an den Boden 12 weist die Ausnehmung 3 in der Umschäumung 1 eine Hinterschneidung 14 auf, die gießtechnisch ohne komplizierte mehrteilige Formen und Schieber realisierbar ist, weil das fertig ausgehärtete Material der Umschäumung 1 hinreichend elastisch ist, um die Formkerne, mit denen die Hinterschneidung 14 gebildet wird, ohne weiteres aus der Ausnehmung 3 herausziehen zu können. Mit 11 ist wiederum das Eintrittsende der Ausnehmung 3 und mit 6, 7 die Achse des Steckstiftes 5 bezeichnet. Dieser weist an seinem unteren Ende ein oder mehrere radial nach außen weisende Vorsprünge 13 oder einen radial nach außen weisenden umlaufenden Vorsprung 13 auf, mit denen er in die Hinterschneidung 14 der Ausnehmung 3 eingreifen kann. Aus der rechten Seite der Darstellung in Figur 7 ergibt sich, daß die Hinterschneidung 14 so hoch ausgebildet ist, daß der Steckstift 5 relativ zur Umschäumung 1 mindestens um das Maß nach unten verschiebbar ist, das zur Betätigung der anderweitig angeordneten Hupkontakte erforderlich ist.

## Patentansprüche

1. Lenkrad für Kraftfahrzeuge
mit einem umschäumten Skelett und
einem Airbag-Modul, das einen über Befestigungsmittel mit dem Skelett verbundenen Generatorträger und eine am Generatorträger befestigte Abdeckkappe aufweist, die als Betätigungseinrichtung zur Erzeugung eines Hupsignals ausgelegt ist,
wobei das gesamte Airbag-Modul zur Hupenbetätigung im wesentlichen parallel zur Lenkradachse (8) verschieblich ist und
wobei in der Umschäumung (1) des Lenkradskeletts (2) wenigstens zwei Ausnehmungen (3) vorgesehen sind,
**dadurch gekennzeichnet, daß**, zusätzlich zu den Befestigungsmitteln, am Generatorträger (4) zu den Ausnehmungen (3) korrespondierende Steckstifte (5) vorgesehen sind, deren Achsen (6, 7) parallel zur Lenkradachse (8) ausgerichtet sind und die zur Zentrierung der Abdeckkappe (9) relativ zur Umschäumung (1) des Lenkradskeletts (2) in der zur Lenkradachse (8) senkrechten Ebene in die Ausnehmungen (3) hineinragen und
deren Bewegung von der Umschäumung (1) in der senkrechten Ebene begrenzt wird, und wobei
bei einer Verschiebung des Airbag-Moduls die Steckstifte (5) in den Ausnehmungen (3) bewegt werden.

2. Lenkrad nach Anspruch 1, **dadurch gekennzeichnet, daß** die Steckstifte (5) hohlzylindrisch ausgebildet sind.

3. Lenkrad nach Anspruch 1 oder 2, **dadurch gekennzeichnet, daß** die Steckstifte (5) aus Kunststoff bestehen und durch Anspritzen am Generatorträger (4) befestigt sind.

4. Lenkrad nach Anspruch 2 oder 3, **dadurch gekennzeichnet, daß** die Steckstifte (5) einen kreisförmigen Querschnitt aufweisen, dessen Außendurchmesser sich von der Anspritzstelle am Generatorträger (4) zum anderen Ende hin zunächst konisch verkleinert und dann über einen Längsabschnitt gleichbleibend ist.

5. Lenkrad nach Anspruch 4, **dadurch gekennzeichnet, daß** der Steckstift (5) am anderen Ende kegelförmig verjüngt ist.

6. Lenkrad nach einem der Ansprüche 1 bis 5, **dadurch gekennzeichnet, daß** die Ausnehmungen (3) in der Umschäumung (1) einen im wesentlichen kreisförmigen Querschnitt mit drei oder vier nach innen vorstehenden Wülsten (10) aufweisen, die sich im wesentlichen über die gesamte Länge der Ausnehmungen (3) erstrecken.

7. Lenkrad nach Anspruch 6, **dadurch gekennzeichnet, daß** die Ausnehmungen (3) einen sich vom Eintrittsende (11) zu ihrem Boden (12) hin zunächst verkleinerten und danach wieder erweiternden Querschnitt aufweisen, so daß die Wülste (10) im Längsschnitt gesehen eine konvexe Seitenbegrenzung mit einem geringsten Querabstand etwa in der Mitte zwischen Eintrittsende (11) und Boden (12) der Ausnehmung (3) aufweisen.

8. Lenkrad nach einem der Ansprüche 1 bis 4 oder Anspruch 6, soweit dieser auf einen der Ansprüche 1 bis 4 rückbezogen ist, **dadurch gekennzeichnet, daß** die Steckstifte (5) an ihrem unteren Ende einen oder mehrere radial nach außen weisende Vorsprünge (13) oder einen radial nach außen weisenden, umlaufenden Vorsprung (13) aufweisen und daß die Ausnehmungen (3) angrenzend an den Boden (12) mit einer Hinterschneidung (14) versehen sind, in die die Vorsprünge (13) eingreifen können.

## Claims

1. A steering wheel for motor vehicles
comprising a foam-encased skeleton and
an airbag module which has a generator support connected with the skeleton by means of fastening means and has a covering cap which is fastened to the generator support and is designed as an actuating device for generating a horn signal,
the entire airbag module being displaceable substantially parallel to the steering wheel axis (8) for actuation of the horn, and
at least two recesses (3) being provided in the foam casing (1) of the steering wheel skeleton (2),
**characterized in that**, in addition to the fastening means, insert pins (5) corresponding to the recesses (3) are provided on the generator support (4), the axes (6, 7) of the insert pins being aligned parallel to the steering wheel axis (8), and the insert pins protruding into the recesses (3) for centering the covering cap (9) relative to the foam casing (1) of the steering wheel skeleton (2) in the plane perpendicular to the steering wheel axis (8), and
the movement of the insert pins being limited by the foam casing (1) in the perpendicular plane, and
upon a displacement of the airbag module, the insert pins (5) being moved in the recesses (3).

2. The steering wheel according to claim 1, **characterized in that** the insert pins (5) are made to be of a hollow cylindrical shape.

3. The steering wheel according to claim 1 or 2, **characterized in that** the insert pins (5) consist of plastic and are fastened to the generator support (4) by being injection-molded thereto.

4. The steering wheel according to claim 2 or 3, **characterized in that** the insert pins (5) have a circular cross-section, the external diameter of which is first reduced conically from the injection-molding site at the generator support (4) towards the other end and then remains the same over a longitudinal section.

5. The steering wheel according to claim 4, **characterized in that** at its other end the insert pin (5) is conically tapered.

6. The steering wheel according to any of claims 1 to 5, **characterized in that** the recesses (3) in the foam casing (1) have a substantially circular cross-section with three or four inwardly projecting beads (10), which extend substantially over the entire length of the recesses (3).

7. The steering wheel according to claim 6, **characterized in that** each recess (3) has a cross-section that is first reduced from the inlet end (11) towards its base (12) and thereafter widens again, so that the beads (10), viewed in a longitudinal section, have a convex lateral delimitation with a minimal transverse gap approximately in the center between the inlet end (11) and the base (12) of the recess (3).

8. The steering wheel according to any of claims 1 to 4 or claim 6, to the extent that claim 6 depends on any of claims 1 to 4, **characterized in that** at their lower ends the insert pins (5) have one or more radially outwardly directed projections (13) or one radially outwardly directed, surrounding projection (13), and that the recesses (3), adjoining the base (12), are provided with an undercut (14) into which the projections (13) can engage.

## Revendications

1. Volant de direction pour véhicules,
comportant un squelette enrobé de mousse,
un module d'airbag qui présente un support de générateur relié au squelette via un moyen de fixation et un couvercle fixé sur le support de générateur et conçu en tant que dispositif d'actionnement pour produire un signal de klaxon,
tout le module d'airbag étant déplaçable sensiblement parallèlement à l'axe (8) du volant de direction pour actionner le klaxon et
au moins deux évidements (3) étant prévus dans l'enrobage de mousse (1) du squelette (2) du volant de direction,
**caractérisé en ce que**, en supplément des moyens de fixation, des goupilles d'enfichage (5) correspondant aux évidements (3) sont prévues sur le support de générateur (4), dont les axes (6, 7) sont orientés parallèlement à l'axe (8) et qui, pour centrer le couvercle (9) par rapport à l'enrobage de mousse (1) du squelette (2) du volant de direction dans le plan perpendiculaire à l'axe (8) du volant de direction, font saillie dans les évidements (3) et
dont le mouvement est limité dans le plan perpendiculaire par l'enrobage de mousse (1), et
les goupilles d'enfichage (5) étant déplacés dans les évidements (3) lors d'un déplacement du module d'airbag.

2. Volant de direction selon la revendication 1, **caractérisé en ce que** les goupilles d'enfichage (5) sont réalisées cylindriques creuses.

3. Volant de direction selon la revendication 1 ou 2, **caractérisé en ce que** les goupilles d'enfichage (5) sont en matière plastique et sont fixées par moulage par injection sur le support de générateur (4).

4. Volant de direction selon la revendication 2 ou 3, **caractérisé en ce que** les goupilles d'enfichage (5) présentent une section transversale circulaire dont le diamètre extérieur diminue tout d'abord de manière conique depuis le point de moulage par injection sur le support de générateur (4) vers l'autre extrémité et reste ensuite constant sur un tronçon longitudinal.

5. Volant de direction selon la revendication 4, **caractérisé en ce que** la goupille d'enfichage (5) se rétrécit de manière tronconique à l'autre extrémité.

6. Volant de direction selon l'une des revendications 1 à 5, **caractérisé en ce que** les évidements (3) présentent dans l'enrobage de mousse (1) une section transversale sensiblement circulaire avec trois ou quatre bourrelets (10) faisant saillie vers l'extérieur, qui s'étendent sensiblement sur toute la longueur des évidements (3).

7. Volant de direction selon la revendication 6, **caractérisé en ce que** les évidements (3) présentent une section transversale qui diminue tout d'abord depuis l'extrémité d'entrée (11) vers leur fond (12) et qui s'élargit ensuite à nouveau, de sorte que les bourrelets (10), vus en coupe longitudinale, présentent une délimitation latérale convexe avec une distance transversale la plus faible approximativement au milieu entre l'extrémité d'entrée (11) et le fond (12) de l'évidement (3).

8. Volant de direction selon l'une des revendications 1 à 4 ou selon la revendication 6, dans la mesure où celui-ci se réfère à l'une des revendications 1 à 4, **caractérisé en ce que** les goupilles d'enfichage (5) présentent à leur extrémité inférieure une ou plusieurs saillies (13) tournées radialement vers l'extérieur ou une saillie (13) périphérique tournée radialement vers l'extérieur, et **en ce que** les évidements (3) sont pourvus d'une contre-dépouille (14) attenante au fond (12), dans laquelle les saillies (13) peuvent s'engager.
